# EUROPEAN PATENT APPLICATION

(11) **EP 2 587 690 A2**
(43) Date of publication of application: **01.05.2013**
(21) Application number: 12007186.5
(22) Date of filing: 17.10.2012
(51) Int. Cl.: H04B 7/06, H04B 17/00

(54) **Dual mode local area network transceiver and methods for use therewith**

(30) Priority: 28.10.2011 US 201161552835 P; 18.12.2011 US 201113329297
(71) Applicant: Broadcom Corporation, Irvine, CA 92617 (US)
(72) Inventor: Afsahi, Ali, San Diego, CA 92129 (US); Behzad, Arya, Poway, CA 92064 (US)
(74) Representative: Jehle, Volker Armin

(57) **Abstract**

A radio frequency (RF) section of an RF transceiver is coupled to an antenna structure that includes a plurality of antennas. The RF section includes a configuration controller operable to generate a control signal that selectively indicates a non-contiguous state in a non-contiguous mode of operation of the RF transceiver and a multi-input multi-output (MIMO) state in a MIMO mode of operation of the RF transceiver.

## Description

### CROSS REFERENCE TO RELATED PATENTS

The present application claims priority based on 35 U.S.C. § 119 to the provisionally filed application entitled, LOCAL AREA NETWORK TRANSCEIVER AND METHODS FOR USE THEREWITH, having serial number 61/552,835, filed on 10/28/2011, and having attorney docket no. BP23760, the contents of which are incorporated herein for any and all purposes, by reference thereto.

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC-NOT APPLICABLE

### BACKGROUND OF THE INVENTION

### TECHNICAL FIELD OF THE INVENTION

This invention relates generally to wireless communication and more particularly to antennas used to support wireless communications.

### DESCRIPTION OF RELATED ART

Communication systems are known to support wireless and wireline communications between wireless and/or wireline communication devices. Such communication systems range from national and/or international cellular telephone systems to the Internet to point-to-point in-home wireless networks to radio frequency identification (RFID) systems. Each type of communication system is constructed, and hence operates, in accordance with one or more communication standards. For instance, wireless communication systems may operate in accordance with one or more standards including, but not limited to, RFID, IEEE 802.11, Bluetooth, advanced mobile phone services (AMPS), digital AMPS, global system for mobile communications (GSM), code division multiple access (CDMA), local multi-point distribution systems (LMDS), multichannel-multi-point distribution systems (MMDS), and/or variations thereof.

Depending on the type of wireless communication system, a wireless communication device, such as a cellular telephone, two-way radio, personal digital assistant (PDA), personal computer (PC), laptop computer, home entertainment equipment, RFID reader, RFID tag, et cetera communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network.

For each wireless communication device to participate in wireless communications, it includes a built-in radio transceiver (i.e., receiver and transmitter) or is coupled to an associated radio transceiver (e.g., a station for in-home and/or in-building wireless communication networks, RF modem, etc.). As is known, the receiver is coupled to the antenna and includes a low noise amplifier, one or more intermediate frequency stages, a filtering stage, and a data recovery stage. The low noise amplifier receives inbound RF signals via the antenna and amplifies then. The one or more intermediate frequency stages mix the amplified RF signals with one or more local oscillations to convert the amplified RF signal into baseband signals or intermediate frequency (IF) signals. The filtering stage filters the baseband signals or the IF signals to attenuate unwanted out of band signals to produce filtered signals. The data recovery stage recovers raw data from the filtered signals in accordance with the particular wireless communication standard.

As is also known, the transmitter includes a data modulation stage, one or more intermediate frequency stages, and a power amplifier. The data modulation stage converts raw data into baseband signals in accordance with a particular wireless communication standard. The one or more intermediate frequency stages mix the baseband signals with one or more local oscillations to produce RF signals. The power amplifier amplifies the RF signals prior to transmission via an antenna.

Currently, wireless communications occur within licensed or unlicensed frequency spectrums. For example, wireless local area network (WLAN) communications occur within the unlicensed Industrial, Scientific, and Medical (ISM) frequency spectrum of 900 MHz, 2.4 GHz, and 5 GHz. While the ISM frequency spectrum is unlicensed there are restrictions on power, modulation techniques, and antenna gain. Another unlicensed frequency spectrum is the V-band of 55-64 GHz.

Other disadvantages of conventional approaches will be evident to one skilled in the art when presented the disclosure that follows.

### BRIEF SUMMARY OF THE INVENTION

The present invention is directed to apparatus and methods of operation that are further described in the following Brief Description of the Drawings, the Detailed Description of the Invention, and the claims.

According to an aspect, a radio frequency (RF) section of an RF transceiver coupled to an antenna structure that includes a plurality of antennas is provided, the RF section comprising:
a configuration controller operable to generate a control signal that selectively indicates a non-contiguous state in a non-contiguous mode of operation of the RF transceiver and a multi-input multi-output (MIMO) state in a MIMO mode of operation of the RF transceiver;
a plurality of transmit paths, coupled to the antenna structure and the configuration controller, that, when the control signal indicates the MIMO state:
   are operable to generate a plurality of MIMO transmit signals at an RF frequency; and
   when the control signal indicates the non-contiguous state:
      are operable to generate a plurality of RF signals at non-contiguous RF frequencies; and
      are operable to generate a non-contiguous transmit signal by combining the plurality of RF signals.

Advantageously, the plurality of transmit paths include a first switch operable, when the control signal indicates the non-contiguous state, to couple a first of the plurality of RF signals from the first of the plurality of transmit paths to second of the plurality of transmit paths to be combined with a second of the plurality of RF signals from a second of the plurality of transmit paths.

Advantageously, the first switch is further operable, when the control signal indicates the MIMO state, to decouple the first of the plurality of transmit paths from the second of the plurality of transmit paths.

Advantageously, the plurality of transmit paths include a second switch that, when the control signal indicates the non-contiguous state, decouples the first of the plurality of RF signals from a first path to the first of the plurality of antennas; and

wherein the non-contiguous transmit signal is coupled via a second path to a second of the plurality of antennas, when the control signal indicates the non-contiguous state.

Advantageously, the plurality of transmit paths each include at least one amplification stage and wherein the first switch is coupled to the output of the at least one amplification stage.

Advantageously, the at least one amplification stage includes a plurality of individual amplification stages and wherein the first switch is coupled to the output of one of the plurality of individual amplification stages.

Advantageously, the plurality of individual amplification stages include at least two of: a programmable gain amplifier, a power amplifier driver and a power amplifier.

Advantageously, the plurality of transmit paths each include a corresponding one of a plurality of power amplifiers, and wherein the RF section further includes:
a power amplifier feedback path coupled to one of the plurality power amplifiers for generating a calibration feedback signal when the control signal indicates the non-contiguous state;
a power amplifier calibration module coupled to process the plurality of calibration feedback signals to generate at least one pre-distortion coefficient for the one of the plurality of power amplifiers.

Advantageously, the power amplifier calibration module generates the at least one pre-distortion coefficient based on the calibration feedback signal generated in response to a plurality of calibration tones.

Advantageously, at least one of the plurality of calibration tones is swept in amplitude.

Advantageously, a first of the plurality of calibration tones is incremented to a plurality of amplitudes and an amplitude of a second of the plurality of tones is swept for each of the plurality of amplitudes of the first of the plurality of tones.

Advantageously, the RF section further comprises a plurality of RF receiver paths and wherein the power amplifier feedback path includes one of the plurality of RF receiver paths.

Advantageously, the RF section further comprises a plurality of RF receiver paths and wherein the power amplifier feedback path is separate from the plurality of RF receiver paths.

Advantageously, the plurality of transmit paths include at least three transmit paths and the non-contiguous transmit signals includes at least three non-contiguous RF channels.

According to an aspect, a radio frequency (RF) section of an RF transceiver coupled to an antenna structure is provided, the RF section comprising:
a configuration controller operable to generate a control signal that selectively indicates a non-contiguous state in a non-contiguous mode of operation of the RF transceiver and a multi-input multi-output (MIMO) state in a MIMO mode of operation of the RF transceiver;
a plurality of transmit paths, coupled to the antenna structure and the configuration controller, that, when the control signal indicates the MIMO state:
   are operable to generate a plurality of MIMO transmit signals at an RF frequency; and
when the control signal indicates the non-contiguous state:
   are operable to generate a plurality of RF signals at non-contiguous RF frequencies; and
an antenna structure, coupled to the configuration controller and the plurality of RF transmit paths that includes:
   a plurality of antennas;
   a combiner coupled to the plurality of antennas; and
   a plurality of switches, that are controllable:
to couple the plurality of MIMO transmit signals to the plurality of antennas when the control signal indicates the MIMO state;
to couple the plurality of RF signals at the non-contiguous RF frequencies to the combiner, wherein the combiner generates a non-contiguous transmit signal by combining the plurality of RF signals; and
to couple to the non-contiguous transmit signal to one of the plurality of antennas when the control signal indicates the non-contiguous state.

Advantageously, the plurality of transmit paths each include a corresponding one of a plurality of power amplifiers, and wherein the RF section further includes:
a plurality of power amplifier feedback paths coupled to the plurality power amplifiers for generating a plurality of calibration feedback signals when the control signal indicates the non-contiguous state; and
a power amplifier calibration module coupled to process the plurality of calibration feedback signals to generate a plurality of pre-distortion coefficients for the plurality of power amplifiers.

Advantageously, the power amplifier calibration module generates the plurality of pre-distortion coefficients based on the plurality of calibration feedback signals generated in response to a plurality of calibration tones.

Advantageously, at least one of the plurality of calibration tones is swept in amplitude.

Advantageously, a first of the plurality of calibration tones is incremented to a plurality of amplitudes and an amplitude of a second of the plurality of tones is swept for each of the plurality of amplitudes of the first of the plurality of tones.

Advantageously, the RF section further comprises a plurality of RF receiver paths and wherein the plurality of power amplifier feedback paths includes the plurality of RF receiver paths.

Advantageously, the RF section further comprises a plurality of RF receiver paths and wherein the plurality of power amplifier feedback paths are separate from the plurality of RF receiver paths.

Advantageously, the plurality of transmit paths include at least three transmit paths and the non-contiguous transmit signals includes at least three non-contiguous RF channels.

Other features and advantages of the present invention will become apparent from the following detailed description of the invention made with reference to the accompanying drawings.

### BRIEF DESCRIPTION OF THE SEVERAL VIEWS OF THE DRAWING(S)

Figure 1 is a schematic block diagram of an embodiment of a wireless communication system in accordance with the present invention;
Figure 2 is a schematic block diagram of another embodiment of a wireless communication system in accordance with the present invention;
Figure 3 is a schematic block diagram of an embodiment of a wireless transceiver 125 in accordance with the present invention;
Figure 4 is a schematic block diagram of an embodiment of a wireless transceiver 125 in accordance with the present invention;
Figure 5 is a schematic block diagram of an embodiment of a RF transceiver 118 in accordance with the present invention;
Figure 6 is a schematic block diagram of an embodiment of transmit paths 310 and 312 in accordance with the present invention;
Figure 7 is a schematic block diagram of an embodiment of antenna structure 100 in accordance with the present invention; and
Figure 8 is a schematic block diagram of an embodiment of power amplifier calibration module 316 in accordance with the present invention.

### DETAILED DESCRIPTION OF THE INVENTION

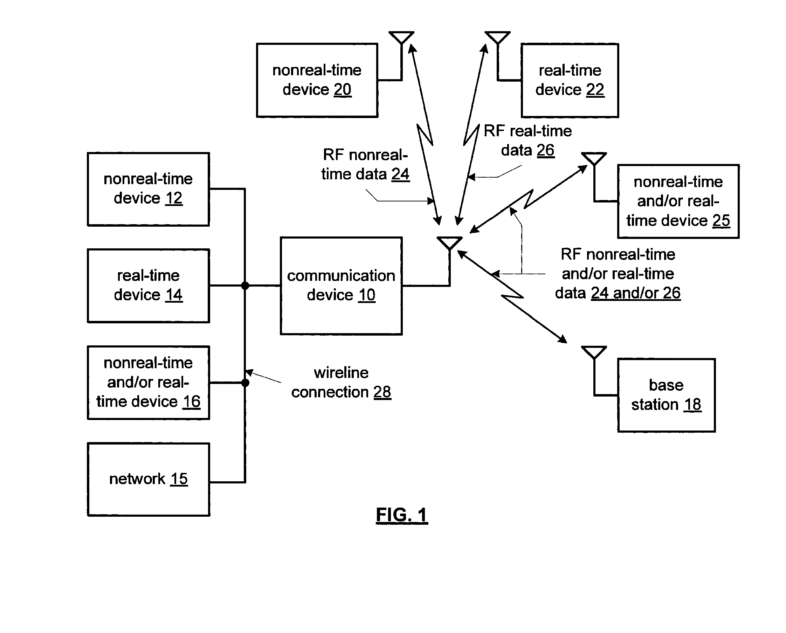

Figure 1 is a schematic block diagram of an embodiment of a communication system in accordance with the present invention. In particular a communication system is shown that includes a communication device 10 that communicates real-time data 24 and/or non-real-time data 26 wirelessly with one or more other devices such as base station 18, non-real-time device 20, real-time device 22, and non-real-time and/or real-time device 25. In addition, communication device 10 can also optionally communicate over a wireline connection with network 15, non-real-time device 12, real-time device 14, non-real-time and/or real-time device 16.

In an embodiment of the present invention the wireline connection 28 can be a wired connection that operates in accordance with one or more standard protocols, such as a universal serial bus (USB), Institute of Electrical and Electronics Engineers (IEEE) 488, IEEE 1394 (Firewire), Ethernet, small computer system interface (SCSI), serial or parallel advanced technology attachment (SATA or PATA), or other wired communication protocol, either standard or proprietary. The wireless connection can communicate in accordance with a wireless network protocol such as WiHD, NGMS, IEEE 802.11a, ac, b, g, n, or other 802.11 standard protocol, Bluetooth, Ultra-Wideband (UWB), WIMAX, or other wireless network protocol, a wireless telephony data/voice protocol such as Global System for Mobile Communications (GSM), General Packet Radio Service (GPRS), Enhanced Data Rates for Global Evolution (EDGE), Personal Communication Services (PCS), or other mobile wireless protocol or other wireless communication protocol, either standard or proprietary. Further, the wireless communication path can include separate transmit and receive paths that use separate carrier frequencies and/or separate frequency channels. Alternatively, a single frequency or frequency channel can be used to bi-directionally communicate data to and from the communication device 10.

Communication device 10 can be a mobile phone such as a cellular telephone, a local area network device, personal area network device or other wireless network device, a personal digital assistant, game console, personal computer, laptop computer, or other device that performs one or more functions that include communication of voice and/or data via wireline connection 28 and/or the wireless communication path. Further communication device 10 can be an access point, base station or other network access device that is coupled to a network 15 such at the Internet or other wide area network, either public or private, via wireline connection 28. In an embodiment of the present invention, the real-time and non-real-time devices 12, 14 16, 18, 20, 22 and 25 can be personal computers, laptops, PDAs, mobile phones, such as cellular telephones, devices equipped with wireless local area network or Bluetooth transceivers, FM tuners, TV tuners, digital cameras, digital camcorders, or other devices that either produce, process or use audio, video signals or other data or communications.

In operation, the communication device includes one or more applications that include voice communications such as standard telephony applications, voice-over-Internet Protocol (VoIP) applications, local gaming, Internet gaming, email, instant messaging, multimedia messaging, web browsing, audio/video recording, audio/video playback, audio/video downloading, playing of streaming audio/video, office applications such as databases, spreadsheets, word processing, presentation creation and processing and other voice and data applications. In conjunction with these applications, the real-time data 26 includes voice, audio, video and multimedia applications including Internet gaming, etc. The non-real-time data 24 includes text messaging, email, web browsing, file uploading and downloading, etc.

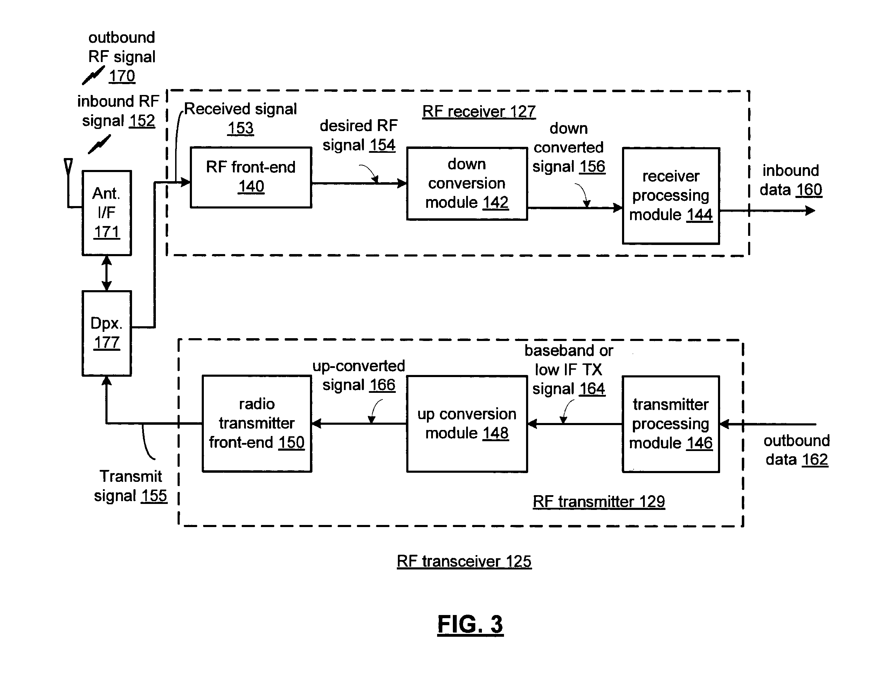

In an embodiment of the present invention, the communication device 10 includes a wireless transceiver that includes one or more features or functions of the present invention. Such wireless transceivers shall be described in greater detail in association with FIGs. 3-8 that follow.

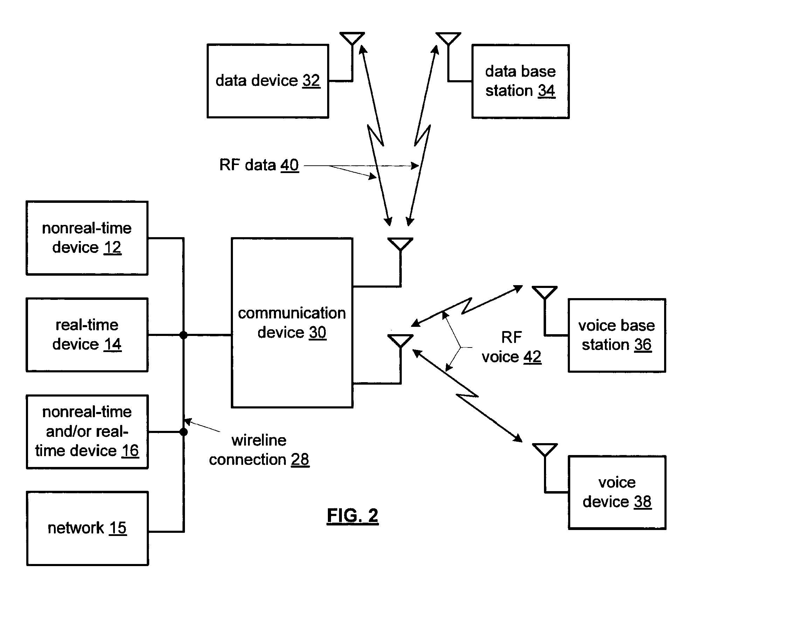

Figure 2 is a schematic block diagram of an embodiment of another communication system in accordance with the present invention. In particular, FIG. 2 presents a communication system that includes many common elements of FIG. 1 that are referred to by common reference numerals. Communication device 30 is similar to communication device 10 and is capable of any of the applications, functions and features attributed to communication device 10, as discussed in conjunction with FIG. 1. However, communication device 30 includes two or more separate wireless transceivers for communicating, contemporaneously, via two or more wireless communication protocols with data device 32 and/or data base station 34 via RF data 40 and voice base station 36 and/or voice device 38 via RF voice signals 42.

Figure 3 is a schematic block diagram of an embodiment of a wireless transceiver 125 in accordance with the present invention. The RF transceiver 125 represents a wireless transceiver for use in conjunction with communication devices 10 or 30, base station 18, non-real-time device 20, real-time device 22, and non-real-time, real-time device 25, data device 32 and/or data base station 34, and voice base station 36 and/or voice device 38. RF transceiver 125 includes an RF transmitter 129, and an RF receiver 127. The RF receiver 127 includes a RF front end 140, a down conversion module 142 and a receiver processing module 144. The RF transmitter 129 includes a transmitter processing module 146, an up conversion module 148, and a radio transmitter front-end 150.

As shown, the receiver and transmitter are each coupled to an antenna through an antenna interface 171 and a diplexer (duplexer) 177, that couples the transmit signal 155 to the antenna to produce outbound RF signal 170 and couples inbound signal 152 to produce received signal 153. Alternatively, a transmit/receive switch can be used in place of diplexer 177. While a single antenna is represented, the receiver and transmitter may share a multiple antenna structure that includes two or more antennas. In another embodiment, the receiver and transmitter may share a multiple input multiple output (MIMO) antenna structure, diversity antenna structure, phased array or other controllable antenna structure that includes a plurality of antennas and other RF transceivers similar to RF transceiver 125. Each of these antennas may be fixed, programmable, and antenna array or other antenna configuration. Also, the antenna structure of the wireless transceiver may depend on the particular standard(s) to which the wireless transceiver is compliant and the applications thereof.

In operation, the RF transmitter 129 receives outbound data 162. The transmitter processing module 146 packetizes outbound data 162 in accordance with a millimeter wave protocol or wireless telephony protocol, either standard or proprietary, to produce baseband or low intermediate frequency (IF) transmit (TX) signals 164 that includes an outbound symbol stream that contains outbound data 162. The baseband or low IF TX signals 164 may be digital baseband signals (e.g., have a zero IF) or digital low IF signals, where the low IF typically will be in a frequency range of one hundred kilohertz to a few megahertz. Note that the processing performed by the transmitter processing module 146 can include, but is not limited to, scrambling, encoding, puncturing, mapping, modulation, and/or digital baseband to IF conversion.

The up conversion module 148 includes a digital-to-analog conversion (DAC) module, a filtering and/or gain module, and a mixing section. The DAC module converts the baseband or low IF TX signals 164 from the digital domain to the analog domain. The filtering and/or gain module filters and/or adjusts the gain of the analog signals prior to providing it to the mixing section. The mixing section converts the analog baseband or low IF signals into up-converted signals 166 based on a transmitter local oscillation.

The radio transmitter front end 150 includes a power amplifier and may also include a transmit filter module. The power amplifier amplifies the up-converted signals 166 to produce outbound RF signals 170, which may be filtered by the transmitter filter module, if included. The antenna structure transmits the outbound RF signals 170 via an antenna interface 171 coupled to an antenna that provides impedance matching and optional bandpass filtration.

The RF receiver 127 receives inbound RF signals 152 via the antenna and antenna interface 171 that operates to process the inbound RF signal 152 into received signal 153 for the receiver front-end 140. In general, antenna interface 171 provides impedance matching of antenna to the RF front-end 140, optional bandpass filtration of the inbound RF signal 152.

The down conversion module 142 includes a mixing section, an analog to digital conversion (ADC) module, and may also include a filtering and/or gain module. The mixing section converts the desired RF signal 154 into a down converted signal 156 that is based on a receiver local oscillation 158, such as an analog baseband or low IF signal. The ADC module converts the analog baseband or low IF signal into a digital baseband or low IF signal. The filtering and/or gain module high pass and/or low pass filters the digital baseband or low IF signal to produce a baseband or low IF signal 156 that includes a inbound symbol stream. Note that the ordering of the ADC module and filtering and/or gain module may be switched, such that the filtering and/or gain module is an analog module.

The receiver processing module 144 processes the baseband or low IF signal 156 in accordance with a millimeter wave protocol, either standard or proprietary to produce inbound data 160 such as probe data received from probe device 105 or devices 100 or 101. The processing performed by the receiver processing module 144 can include, but is not limited to, digital intermediate frequency to baseband conversion, demodulation, demapping, depuncturing, decoding, and/or descrambling.

In an embodiment of the present invention, receiver processing module 144 and transmitter processing module 146 can be implemented via use of a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The associated memory may be a single memory device or a plurality of memory devices that are either on-chip or off-chip. Such a memory device may be a read-only memory, random access memory, volatile memory, non-volatile memory, static memory, dynamic memory, flash memory, and/or any device that stores digital information. Note that when the processing devices implement one or more of their functions via a state machine, analog circuitry, digital circuitry, and/or logic circuitry, the associated memory storing the corresponding operational instructions for this circuitry is embedded with the circuitry comprising the state machine, analog circuitry, digital circuitry, and/or logic circuitry.

While the processing module 144 and transmitter processing module 146 are shown separately, it should be understood that these elements could be implemented separately, together through the operation of one or more shared processing devices or in combination of separate and shared processing.

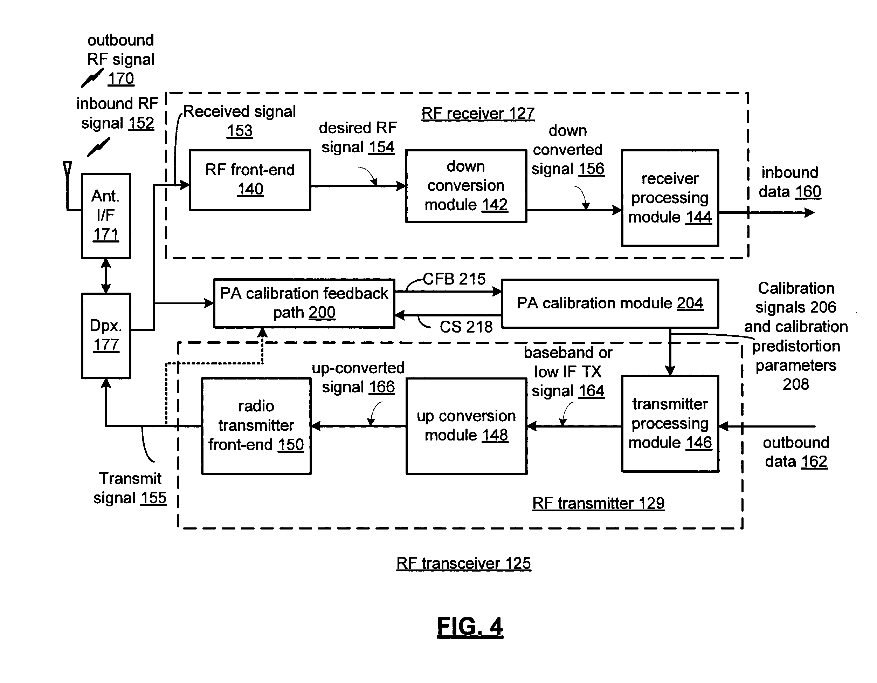

Further details including optional functions and features of the RF transceiver are discussed in conjunction with FIGs. 4-8 that follow.

Figure 4 is a schematic block diagram of an embodiment of a wireless transceiver 125 in accordance with the present invention. In addition to the components discussed in conjunction with FIG. 3, in this embodiment, RF transceiver 125 includes a power amplifier calibration feedback path 200 that is selectively engaged, based on control signal 218 to provide calibration feedback 215 to power amplifier calibration module 204 in order to linearize or otherwise calibrate the RF transmitter 129.

Power amplifier calibration feedback path 200 provides an on-chip linear feedback path to be used in the pre-distortion of the power amplifier of RF transmitter 129, such as an off-chip PA. Being able to handle high power input signals can be important to achieving good pre-distortion/calibration performance, due to various reasons such as coupling, noise etc.

In one mode of operation, PA calibration module 204 provides power amplifier calibration signals 206 to transmitter processing module 146. The resulting transmit signal 155 generates a received signal 153 that is coupled via power amplifier calibration feedback path 200 as calibration feedback 215 to power amplifier calibration module 204. In this calibration routine, the power amplifier calibration module 204 determines power amplifier pre-distortion parameters 208. Transmitter processing module 146 uses the power amplifier pre-distortion parameters 208 to linearize RF transmitter 129 during normal operation.

The operation of RF transceiver 125 can be described in conjunction with the following example. RF receiver 127 has an RF receiver path that processes a received signal 153 to generate inbound data 160. In a calibration mode of operation, power amplifier calibration module 204 generates power amplifier calibration signals 206 that are transferred to transmitter processing module 146 and also generate control signals 218 to enable the power amplifier calibration feedback path 200. The RF transmitter 129 processes the power amplifier calibration signals 206 to generate an amplified calibration output in the calibration mode of operation as transmit signal 155. Some or all of the transmit signal 155 is coupled to the input of the RF receiver 127 as received signal 153.

The power amplifier calibration feedback path 200 can, as shown, operate separately from the RF receiver path of RF receiver 127 to generate the calibration feedback signal 215 in response to the amplified calibration output present in received signal 153. In the alternative, the power amplifier calibration feedback path can utilize one or more components of RF receiver 127. The power amplifier calibration module 204 generates power amplifier pre-distortion parameters 208 in response to a calibration feedback signal 215. The transmitter processing module 146 of RF transmitter 146 processes output data 146 to generate the transmit signal 155 based on the power amplifier pre-distortion parameters 208 in a transmit mode of operation, to linearize the operation of the RF transmitter 129, particularly the power amplifier of radio transmitter front end 150.

It should be noted that, while the calibration feedback path 200 is shown as operating based on received signal 153, other feedbacks signals, such as the transmit signal 155 or other direct output from the power amplifier of radio transmitter front end 150 can likewise be used.

In an embodiment of the present invention, power amplifier calibration module 204 can be implemented via use of a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The associated memory may be a single memory device or a plurality of memory devices that are either on-chip or off-chip. Such a memory device may be a read-only memory, random access memory, volatile memory, non-volatile memory, static memory, dynamic memory, flash memory, and/or any device that stores digital information. Note that when the processing device implements one or more of their functions via a state machine, analog circuitry, digital circuitry, and/or logic circuitry, the associated memory storing the corresponding operational instructions for this circuitry is embedded with the circuitry comprising the state machine, analog circuitry, digital circuitry, and/or logic circuitry. While shown as a separate device, it should be noted that power amplifier calibration module 204 can be implemented as part of transmitter processing module 146.

In operation, the power amplifier calibration module 204 compares the calibration feedback 215 in response to power amplifier calibration signals 206 at different amplitudes and/or frequencies to idealized linear responses. The differences between the compares the calibration feedback 215 and these idealized responses is used by power amplifier calibration module 204 in order to compute the amount of pre-distortion required for different amplitudes and frequencies to linearize or substantially linearize the response of RF transmitter 129.

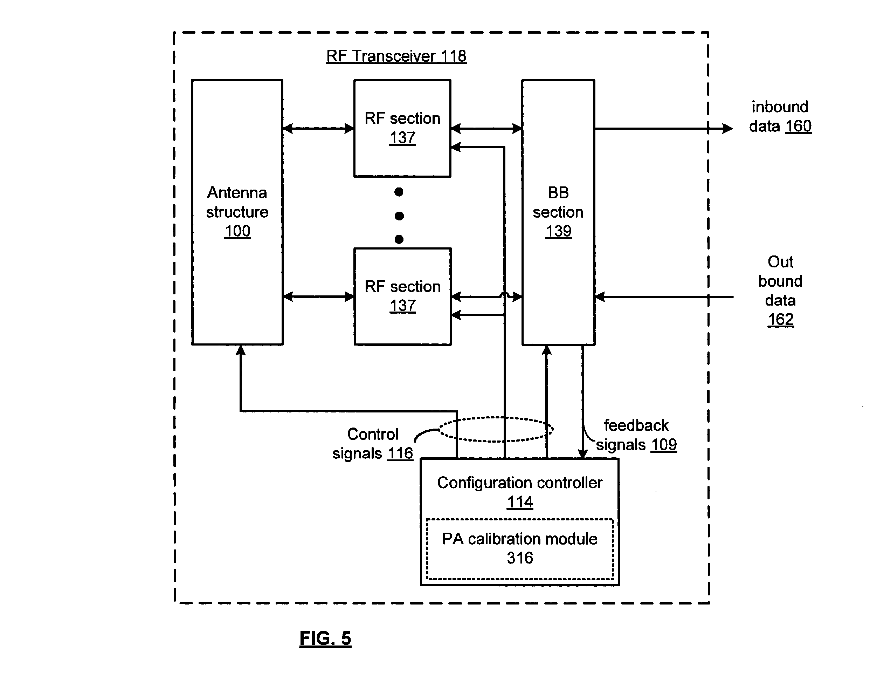

Figure 5 is a schematic block diagram of an embodiment of a RF transceiver section 118 in accordance with the present invention. In particular, RF transceiver section 118 includes multiple RF sections 137 corresponding, for example, to each of the antennas in antenna array 100. Each RF section 137 can include, for example, RF front-end 140, down conversion module 142, up conversion module 148 and radio transmitter front-end 150. The functionality of receiver processing module 144 and transmitter processing module 146, for each RF section 137, can be implemented by a baseband section 139.

RF sections 137 implement multiple separate transmitter paths which up-convert baseband signals for transmission by the antenna or antennas of antenna structure 100. RF transceiver 118 presents a structure that can be switched between MIMO and non-contiguous modes of operation, based on control signals 116 generated by configuration controller 114. In the MIMO mode of operation, the antenna structure 100, RF sections 137 and baseband section 139 are configured by control signals 116 to implement multiple separate transmitter paths which up-convert different baseband signals to a single RF frequency for separate antennas of the antenna structure 100. In the non-contiguous transmitter mode of operation, control signals 116 configure the baseband section 139 to generate separate baseband signals that are up-converted to different RF frequencies by RF sections 137 for transmission using either a single or multiple antennas.

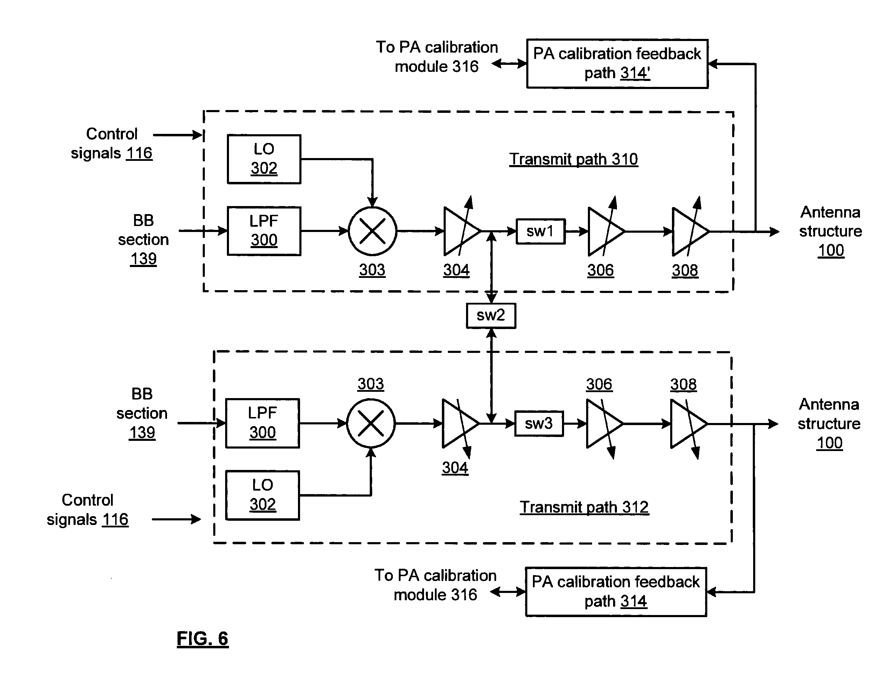

Power amplifier calibration module 316 of configuration controller 114 selectively operates a calibration routine to calibrate the power amplifiers of RF sections 137 in either a MIMO or non-contiguous mode of operation. The calibration module 316 provides calibration signals to baseband section 139. The resulting MIMO or noncontiguous transmit signals are coupled back to the PA calibration module 316 as calibration feedback. In this calibration routine, the power amplifier calibration module 316 determines pre-distortion parameters for each of the RF sections 137 in use in the selected mode of operation. Baseband section 139 uses the pre-distortion parameters to linearize or substantially linearize the power amplifiers of the corresponding RF sections 137. This process will be described further in conjunction with FIGs. 6-8 that follow.

Figure 6 is a schematic block diagram of an embodiment of transmit paths 310 and 312 in accordance with the present invention. In particular, two different transmit paths of two different RF sections 137 of RF transceiver 118 are presented. The transmit paths 310 and 312 each include a low pass filter 300, local oscillator 302, mixer 303 programmable gain amplifier 304, power amplifier driver 306, and power amplifier 308. As discussed in conjunction with FIG. 5, a configuration controller, such as configuration controller 114 generates control signals 116 that selectively indicate either a non-contiguous state in a non-contiguous mode of operation of the RF transceiver 118 or a multi-input multi-output (MIMO) state in a MIMO mode of operation of the RF transceiver 118.

The transmit paths 310 and 312 can be switched via the operation of switches SW1 and SW2 between the MIMO and non-contiguous modes of operation, based on control signals 116. The switch SW2 is controlled to close when the control signals 116 indicates the non-contiguous state, to couple a first RF signal from the transmit path 310 to the transmit path 312 -- to be combined with a second RF signal from transmit path 312. SW2 is further operable, when the control signals 116 indicates the MIMO state, to open, decoupling the transmit path 310 from the transmit path 312. The switch SW1 of transmit path 310 is controlled to open and the switch SW3 of transmit path 312 is closed when the control signals 116 indicates the non-contiguous state, decoupling the first RF signals from the path through remaining portions of transmit path 310 to the antenna structure 100. SW1 of transmit path 310 and SW3 of transmit path 312 is further operable to close when the control signals 116 indicate the MIMO state, to couple MIMO signals through the full paths of transmit path 310 and transmit path 312 for amplification and transmission via antenna structure 100. In non-contiguous mode of operation, the operation of switches SW1 and SW3 can be reversed to use the full transmit path 310 rather than full transmit path 312. In this reciprocal case, switch SW2 couples a first RF signal from the transmit path 312 to the transmit path 310 -- to be combined with a second RF signal from transmit path 310.

In this fashion, in the MIMO mode of operation, switch SW1 is closed and switch SW2 is opened and the transmit paths 310 and 312 implement two separate transmitter paths which up-convert different baseband signals to a single RF frequency for two separate antennas of the antenna structure 100. In particular, for both transmit paths 310 and 312, baseband signals from baseband section 139 are filtered by the low pass filter 300 and upconverted to the same RF frequency via mixing of local oscillator signal of local oscillators 302 via mixers 303. The MIMO RF signal for each path is amplified by programmable gain amplifiers 304, power amplifier drivers 306 and power amplifiers 308 to generate a MIMO transmit signal for each of the transmit paths 310 and 312 to be coupled to two separate antennas of antenna structure 100.

In the non-contiguous mode of operation, control signals 116 configure the transmit paths 310 and 312 so that switch SW2 is closed and switch SW1 is open. In this mode of operation the transmit paths 310 and 312 upconvert separate baseband signals to two different RF frequencies (corresponding to two non-contiguous channels) based on different local oscillator signals. The output of programmable gain amplifier 304 of transmit path 310 is coupled via SW2 and combined at RF with the output of programmable gain amplifier 304 of transmit path 312 via an adder circuit or other combining circuit not specifically shown. The power amplifier driver 306 and power amplifier 308 of transmit path 312 are used to generate a single RF transmit signal for transmission by a single antenna coupled to transmit path 312. The power amplifier driver 306 and power amplifier 308 of transmit path 310 can be disabled and powered down in response to control signals 116 in this mode of operation.

The operation of transmit paths 310 and 312 can be further described in conjunction with the following example. Consider the case where RF transceiver 118 operates in conjunction with the 802.11ac standard in a 5 GHz frequency band. In non-contiguous operation, two 80 MHz channels that are separated by one or more other channels can be combined to implement a single 160 MHz (80 MHz +80 MHz) channel with approximately twice the throughput. Transmit path 310 generates an RF signal for one of the 80 MHz channels and couples the RF signal to the transmit path 312. The transmit path 312 generates an RF signal for the other 80 MHz channel and combines the two channel signals at RF and power amplifies both signals to generate a single non-contiguous transmit signal as its output.

Each RF section 137 further includes a power amplifier feedback path (314, 314'...) coupled at the output of each power amplifier 308 and further to power amplifier calibration module 316 from FIG. 5 for generating a calibration feedback signal during calibration of each transmit path 310, 312. For calibration in the MIMO mode of operation, calibration feedback from both power amplifier feedback paths 314 and 314' are generated to calibrate the power amplifiers 308 of each transmit path. In non-contiguous mode however, calibration feedback is only generated from power amplifier feedback paths 314 - because the power amplifier 308 of transmit path 310 is not in use.

It should also be noted that the transmit paths 310 and 312 and can be implemented in a plurality of RF sections 137 on a single integrated circuit die. Each RF section 137 can include receiver path corresponding to each transmit path that includes, for example, an RF front-end and a down conversion module, such RF front-end 140 and a down conversion module 142. In an embodiment of the present invention, the power amplifier feedback paths 314, 314' are implemented via the RF receiver path of the receiver of RF section 137 that corresponds to each transmit path. In the alternative, a separate feedback path, such as power amplifier feedback path 200, can be implemented that is separate from the RF receiver path of the corresponding receiver.

It should be noted that while switches SW1 and SW2 are shown as implementing a coupling after the first amplification stage 304, in other embodiments, SW1 and SW2 could be configured differently. For example, SW1 and SW2 could alternatively be placed directly after the mixer 303 or after stage 306 or 308, depending on the loss, power handling abilities and linearity of the switches, etc.

It should also be noted that, while FIG. 6 contemplates switching of two transmit paths to combine two non-contiguous channels, three or more transmits paths could likewise be switched in a similar fashion to combine three or more non-contiguous channels at RF.

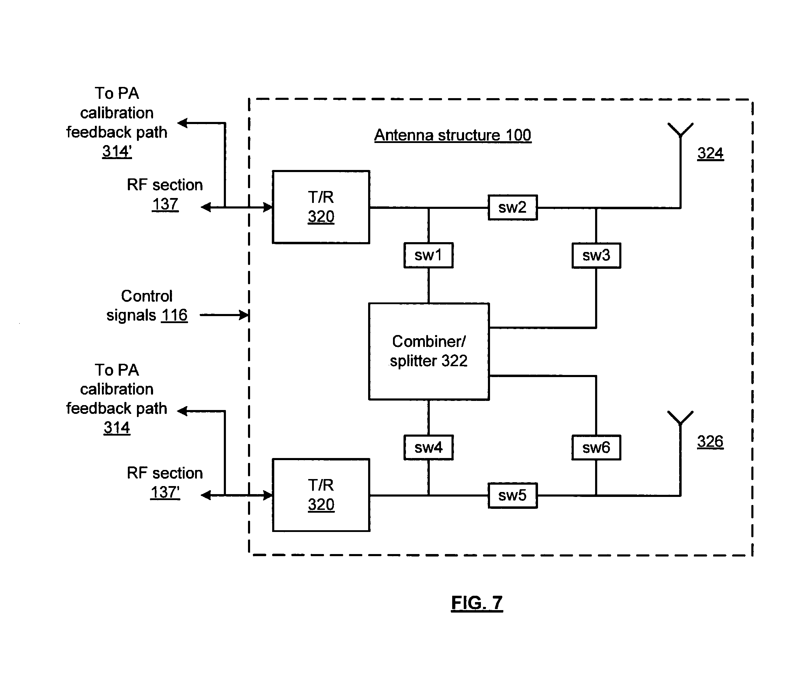

Figure 7 is a schematic block diagram of an embodiment of antenna structure 100 in accordance with the present invention. In particular an antenna structure is presented for use in conjunction with RF transceiver 118 that operates in either MIMO or non-contiguous modes of operation. Unlike the configuration described in conjunction with FIG. 6, however, where the RF signals in non-contiguous mode are combined in RF in the RF sections 137, in this mode of operation, the RF signals corresponding to two non-contiguous channels are combined in the antenna structure 100.

In this mode of operation, the transmit paths of the RF sections 137 are operable to generate a plurality of MIMO transmit signals at an RF frequency when the control signals 116 indicate a MIMO state and are operable to generate a plurality of RF signals at non-contiguous RF frequencies when the control signals 116 indicate the non-contiguous state. The antenna structure 100 includes a plurality of antennas (324, 326) and a combiner, such as combiner/splitter 322 and a plurality of switches SW1, SW2, SW3, SW4, SW5, and SW6 that are controllable based on the control signals 116. In operation, the switches couple the plurality of MIMO transmit signals to the plurality of antennas when the control signal indicates the MIMO state. In the non-contiguous mode the switches couple the plurality of RF signals at the non-contiguous RF frequencies to the combiner/splitter 322, and the combiner/splitter 322 generates a non-contiguous transmit signal by combining the plurality of RF signals. In the non-contiguous mode the switches further couple the non-contiguous transmit signal to one of the plurality of antennas.

The operation of the antenna structure can be further described in conjunction with the following example. Consider the case where RF transceiver 118 operates in conjunction with the 802.11ac standard in a 5 GHz frequency band. In non-contiguous operation, two 80 MHz channels that are separated by one or more other channels can be combined to implement a single 160 MHz (80 MHz + 80 MHz) channel with approximately twice the throughput. The RF section 137 generates an RF signal for one of the 80 MHz channels and couples the RF signal to the antenna structure 100. The RF section 137' generates an RF signal for the other 80 MHz channel and couples the second RF signal to the antenna structure 100. The transmit/receive (T/R) switches pass both of these RF signals. Switches SW1 and SW4 are closed and the two RF signals are combined by combiner splitter 322 to form a non-contiguous transmit signal. Switches SW2, SW3 and SW5 are open and SW6 is closed and the combined non-contiguous transmit signal is coupled to antenna 326. Note, if instead, SW3 is closed and SW6 is open, the non-contiguous transmit signal is coupled to the antenna 324 for transmission. In this mode of operation, combiner splitter 322 operates to split RF signals from a single antenna (324 or 326) through transmit receive switches 320 to be received by RF sections 137 and 137'

In yet another mode of operation, combiner/splitter 322 not only combines the two RF signals but splits the combined signal into two outputs. In this case SW3 and SW6 are both closed and the contiguous transmit signal is coupled to both antennas 324 and 326 for transmission. In MIMO mode of operation, the switches SW1, SW3, SW4 and SW6 are all open and SW2 and SW5 are closed so that the MIMO transmit signals from RF sections 137 and 137' are coupled to antennas 324 and 326, respectively.

As in the embodiment of FIG. 6 a plurality of power amplifier feedback paths (314, 314'...) are coupled to generate a plurality of calibration feedback signals when the control signal indicates the non-contiguous state. Since a full transmit path of each RF section 137, 137' is used, whether or not the RF transceiver 118 is in the MIMO or non-contiguous mode of operation, each power amplifier needs to be calibrated regardless of the mode.

It should also be noted that, while FIG. 7 contemplates switching to combine two non-contiguous channels, three or more RF signals could likewise be switched in a similar fashion to combine three or more non-contiguous channels.

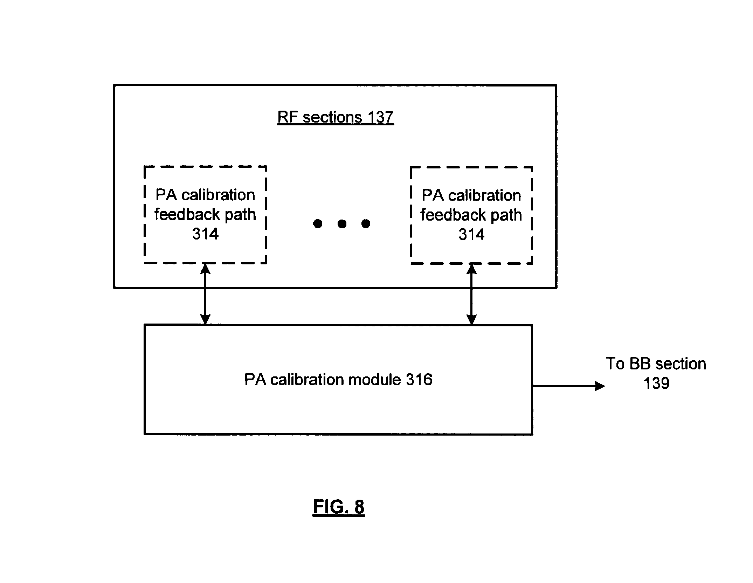

Figure 8 is a schematic block diagram of an embodiment of power amplifier calibration module 316 in accordance with the present invention. In particular, calibration module 316 can operate in a similar fashion to power amplifier calibration module 204, except to calibrate a plurality of different transmit paths. In an embodiment of the present invention, power amplifier calibration module 316 can be implemented via use of a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The associated memory may be a single memory device or a plurality of memory devices that are either on-chip or off-chip. Such a memory device may be a read-only memory, random access memory, volatile memory, non-volatile memory, static memory, dynamic memory, flash memory, and/or any device that stores digital information. Note that when the processing device implements one or more of their functions via a state machine, analog circuitry, digital circuitry, and/or logic circuitry, the associated memory storing the corresponding operational instructions for this circuitry is embedded with the circuitry comprising the state machine, analog circuitry, digital circuitry, and/or logic circuitry. While shown as a separate device, it should be noted that power amplifier calibration module 316 can be implemented as part of baseband processing module 139.

In the non-contiguous mode of operation, the transmitter and power amplifier of one or more RF sections 137 can be linearized using digital pre-distortion. In this technique, two tones are simultaneously transmitted at the desired frequencies in response to control signals via power amplifier calibration module 316. The RF sections 137 are configured via control signals 116 to loop back the received signal through two different receivers. Control signals 116 are generated by power amplifier calibration module 316 to cause the amplitudes of the tones to be swept. In one mode of operation, one tone is constant while the other tone is swept. In another mode of operation, one tone incremented through a range of amplitudes. For each increment, the second tone is swept, providing a two-dimensional sweep.

Feedback signals 109 generated in response to the received signals can be used to generate amplitude to amplitude and amplitude to phase distortions of each tone in the presence of the other tone. Power amplifier calibration module 316 uses this information to calculate the pre-distortion coefficients that can be sent via control signals 116 to the baseband section 139 for digitally linearizing the transmit paths of RF sections 137, 137', etc. In MIMO mode of operation, each of the transmit paths can be linearized. In non-contiguous mode of operation where the RF signals are combined prior to the power amplifier 308 in the transmit paths 310 and 312, generally, only the transmit path 312 needs be linearized. In non-contiguous mode where the RF signals of the two channels are combined in RF in the antenna structure 100, both transmit paths can be separately linearized.

The operation of power amplifier calibration module 316 can be further described in conjunction with the following example. In non-contiguous mode where the RF signals of the two channels are combined in RF in the antenna structure 100, the power amplifier calibration module 316 sends one tone for each of the two non-contiguous channels and receives calibration feedback signals from two power amplifier calibration feedback paths 314. The AM to AM distortion and AM to PM distortion is captured for each tone and pre-distortion coefficients are calculated based on these results. In non-contiguous mode where the RF signals of the two channels are combined in RF in the transmit paths prior to power amplification, the power amplifier calibration module 316 sends one tone for each of the two non-contiguous channels simultaneously and receives calibration feedback signals from one power amplifier calibration feedback path 314 that captures the AM to AM distortion and AM to PM distortion for the first tone with a first local oscillator frequency. The power amplifier calibration feedback path 314 then switches to the second local oscillator frequency to down convert the second tone, repeats the process of capturing the AM to AM distortion and AM to PM distortion for the second tone and calculates the pre-distortion coefficients based on these results. In the alternative, two calibration feedback paths 314 can be employed, one path with a first local oscillator frequency to tune the first tone and a second path with a second local oscillator frequency to tune the second tone.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "processing circuit", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may be, or further include, memory and/or an integrated memory element, which may be a single memory device, a plurality of memory devices, and/or embedded circuitry of another processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

While the transistors in the above described figure(s) is/are shown as field effect transistors (FETs), as one of ordinary skill in the art will appreciate, the transistors may be implemented using any type of transistor structure including, but not limited to, bipolar, metal oxide semiconductor field effect transistors (MOSFET), N-well transistors, P-well transistors, enhancement mode, depletion mode, and zero voltage threshold (VT) transistors.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a processing module, a functional block, hardware, and/or software stored on memory for performing one or more functions as may be described herein. Note that, if the module is implemented via hardware, the hardware may operate independently and/or in conjunction software and/or firmware. As used herein, a module may contain one or more sub-modules, each of which may be one or more modules.

While particular combinations of various functions and features of the present invention have been expressly described herein, other combinations of these features and functions are likewise possible. The present invention is not limited by the particular examples disclosed herein and expressly incorporates these other combinations.

## Claims

1. A radio frequency (RF) section of an RF transceiver coupled to an antenna structure that includes a plurality of antennas, the RF section comprising:
a configuration controller operable to generate a control signal that selectively indicates a non-contiguous state in a non-contiguous mode of operation of the RF transceiver and a multi-input multi-output (MIMO) state in a MIMO mode of operation of the RF transceiver;
a plurality of transmit paths, coupled to the antenna structure and the configuration controller, that, when the control signal indicates the MIMO state:
are operable to generate a plurality of MIMO transmit signals at an RF frequency; and
when the control signal indicates the non-contiguous state:
are operable to generate a plurality of RF signals at non-contiguous RF frequencies; and
are operable to generate a non-contiguous transmit signal by combining the plurality of RF signals.

2. The RF section of claim 1 wherein the plurality of transmit paths include a first switch operable, when the control signal indicates the non-contiguous state, to couple a first of the plurality of RF signals from the first of the plurality of transmit paths to second of the plurality of transmit paths to be combined with a second of the plurality of RF signals from a second of the plurality of transmit paths.

3. The RF section of claim 2 wherein the first switch is further operable, when the control signal indicates the MIMO state, to decouple the first of the plurality of transmit paths from the second of the plurality of transmit paths.

4. The RF section of claim 3 wherein the plurality of transmit paths include a second switch that, when the control signal indicates the non-contiguous state, decouples the first of the plurality of RF signals from a first path to the first of the plurality of antennas; and
wherein the non-contiguous transmit signal is coupled via a second path to a second of the plurality of antennas, when the control signal indicates the non-contiguous state.

5. The RF section of claim 2 wherein the plurality of transmit paths each include at least one amplification stage and wherein the first switch is coupled to the output of the at least one amplification stage.

6. The RF section of claim 5 wherein the at least one amplification stage includes a plurality of individual amplification stages and wherein the first switch is coupled to the output of one of the plurality of individual amplification stages.

7. The RF section of claim 6 wherein the plurality of individual amplification stages include at least two of: a programmable gain amplifier, a power amplifier driver and a power amplifier.

8. The RF section of claim 1 wherein the plurality of transmit paths each include a corresponding one of a plurality of power amplifiers, and wherein the RF section further includes:
a power amplifier feedback path coupled to one of the plurality power amplifiers for generating a calibration feedback signal when the control signal indicates the non-contiguous state;
a power amplifier calibration module coupled to process the plurality of calibration feedback signals to generate at least one pre-distortion coefficient for the one of the plurality of power amplifiers.

9. The RF section of claim 8 wherein the power amplifier calibration module generates the at least one pre-distortion coefficient based on the calibration feedback signal generated in response to a plurality of calibration tones.

10. The RF section of claim 9 wherein at least one of the plurality of calibration tones is swept in amplitude.

11. The RF section of claim 9 wherein a first of the plurality of calibration tones is incremented to a plurality of amplitudes and an amplitude of a second of the plurality of tones is swept for each of the plurality of amplitudes of the first of the plurality of tones.

12. The RF section of claim 8 further comprising a plurality of RF receiver paths and wherein the power amplifier feedback path includes one of the plurality of RF receiver paths.

13. The RF section of claim 8 further comprising a plurality of RF receiver paths and wherein the power amplifier feedback path is separate from the plurality of RF receiver paths.

14. The RF section of claim 1 wherein the plurality of transmit paths include at least three transmit paths and the non-contiguous transmit signals includes at least three non-contiguous RF channels.

15. A radio frequency (RF) section of an RF transceiver coupled to an antenna structure, the RF section comprising:
a configuration controller operable to generate a control signal that selectively indicates a non-contiguous state in a non-contiguous mode of operation of the RF transceiver and a multi-input multi-output (MIMO) state in a MIMO mode of operation of the RF transceiver;
a plurality of transmit paths, coupled to the antenna structure and the configuration controller, that, when the control signal indicates the MIMO state:
are operable to generate a plurality of MIMO transmit signals at an RF frequency; and
when the control signal indicates the non-contiguous state:
are operable to generate a plurality of RF signals at non-contiguous RF frequencies; and
an antenna structure, coupled to the configuration controller and the plurality of RF transmit paths that includes:
a plurality of antennas;
a combiner coupled to the plurality of antennas; and
a plurality of switches, that are controllable:
to couple the plurality of MIMO transmit signals to the plurality of antennas when the control signal indicates the MIMO state;
to couple the plurality of RF signals at the non-contiguous RF frequencies to the combiner, wherein the combiner generates a non-contiguous transmit signal by combining the plurality of RF signals; and
to couple to the non-contiguous transmit signal to one of the plurality of antennas when the control signal indicates the non-contiguous state.
